(19) Europäisches Patentamt
European Patent Office
Office européen des brevets

(11) **EP 2 196 780 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
***G01F 1/84*** *(2006.01)*

(21) Anmeldenummer: **09014555.8**

(22) Anmeldetag: **23.11.2009**

(54) **Verfahren zum Betreiben eines Resonanzmesssystems und Resonanzmesssystem**

Method for operating a resonance measuring system and resonance measuring system

Procédé d'opération d'un système de mesure à résonance et système de mesure à résonance

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.12.2008 DE 102008059920**

(43) Veröffentlichungstag der Anmeldung:
**16.06.2010 Patentblatt 2010/24**

(73) Patentinhaber: **Krohne Messtechnik GmbH**
**47058 Duisburg (DE)**

(72) Erfinder: **Kourosh, Kolahi, Dr.**
**47051 Duisburg (DE)**

(74) Vertreter: **Gesthuysen Patent- und Rechtsanwälte**
**Patentanwälte**
**Postfach 10 13 54**
**45013 Essen (DE)**

(56) Entgegenhaltungen:
**DE-A1- 10 002 635          DE-A1-102006 031 198**
**US-A1- 2002 178 803**

**Beschreibung**

Die Erfindung betrifft ein Verfahren zum Betreiben eines Resonanzmeßsystems, insbesondere eines Coriolis-Massedurchflußmeßgeräts, wobei das Resonanzmeßsystem wenigstens ein Schwingelement, wenigstens einen Schwingungserzeuger und wenigstens einen Schwingungsaufnehmer aufweist, wobei das Schwingelement in wenigstens einer Regelung in wenigstens einem Regelkreis durch den von wenigstens einem Anregungssignal angeregten Schwingungserzeuger zur Schwingung in wenigstens einer Eigenform angeregt wird und die angeregte Schwingung des Schwingelements von dem Schwingungsaufnehmer als wenigstens ein Antwortsignal erfaßt wird. Darüber hinaus betrifft die Erfindung auch ein Resonanzmeßsystem, das gemäß dem vorstehenden Verfahren betrieben werden kann.

Resonanzmeßsysteme der vorgenannten Art sind seit vielen Jahren bekannt, nicht nur in Form von Coriolis-Massedurchflußmeßgeräten, sondern auch als Dichtemeßgeräte oder Füllstandwächter nach dem Stimmgabel-Prinzip, als Quarzwaagen und Bandviskosimeter u.a.m. Diese Resonanzmeßsysteme stehen mit einem Prozeß in Verbindung, wobei sich Prozeß und Resonanzmeßsystem wechselseitig beeinflussen.

Im folgenden werden Resonanzmeßsysteme am Beispiel von Coriolis-Massedurchflußmeßgeräten behandelt, was nicht einschränkend zu verstehen ist. Als Resonanzmeßsysteme werden vorliegend ganz allgemein solche Systeme bezeichnet, bei denen Informationen über die zu bestimmenden Prozeßgrößen (Meßgrößen) in den Eigenfrequenzen verschlüsselt sind oder/und solche Systeme, bei denen Arbeitspunkte auf die Eigenfrequenzen des Meßsystems gelegt werden. Auf alle unter diese Definition fallenden Systeme sind die nachfolgenden Ausführungen anwendbar. Bei Coriolis-Massedurchflußmeßgeräten entspricht das Meßrohr dem Schwingelement des Resonanzmeßsystems; auch diese besondere Ausgestaltung des Schwingelements stellt keine Einschränkung für die allgemein auf Resonanzmeßsysteme anwendbare Lehre dar.

Als Coriolis-Massedurchflußmeßgeräte ausgebildete Resonanzmeßsysteme werden vor allem in der industriellen Prozeßmeßtechnik dort eingesetzt, wo mit hoher Genauigkeit Masseströme bestimmt werden müssen. Die Funktionsweise von Coriolis-Massedurchflußmeßgeräten beruht darauf, daß wenigstens ein von einem Medium durchströmtes Meßrohr - Schwingelement - von einem Schwingungserzeuger zu einer Schwingung angeregt wird, wobei das massebehaftete Medium aufgrund der zwei orthogonalen Geschwindigkeiten - die der Strömung und die des Meßrohres - hervorgerufenen Coriolis-Trägheitskraft auf die Wandung des Meßrohrs rückwirkt. Diese Rückwirkung des Mediums auf das Meßrohr führt zu einer Änderung der Meßrohrschwingung im Vergleich zu dem undurchströmten Schwingungszustand des Meßrohrs. Durch Erfassung dieser Besonderheiten der Schwingungen des durchströmten Coriolis-Meßrohrs kann der Massedurchfluß durch das Meßrohr mit hoher Genauigkeit bestimmt werden.

Von besonderer Bedeutung sind die Eigenfrequenzen des Coriolis-Massedurchflußmeßgeräts bzw. der schwingfähigen Teile des Coriolis-Massedurchflußmeßgeräts, im wesentlichen also die Eigenfrequenzen des Meßrohrs, weil die Arbeitspunkte des Coriolis-Massedurchflußmeßgeräts üblicherweise auf Eigenfrequenzen des Meßrohrs gelegt werden, um die erforderlichen Schwingungen für die Induktion der Corioliskräfte mit einem minimalen Energieaufwand einprägen zu können. Die dann von dem Meßrohr ausgeführten Schwingungen weisen eine bestimmte Form auf, die als Eigenform der jeweiligen Anregung bezeichnet wird; siehe z.B. DE 10 2006 031 198 A1.

Das Schwingverhalten des Coriolis-Massedurchflußmeßgeräts bzw. des Meßrohres wird durch verschiedene Systemparameter bestimmt, beispielsweise durch die Schwingmassen, die Dämpfungen und die Steifigkeiten der Eigenformen des Meßrohrs. Diese Systemparameter sind in der Praxis in der Regel jedoch zeitvariant und können sich unter Umständen sehr schnell - aber auch schleichend - ändern, was die Güte der Messung direkt beeinflußt, insbesondere dann, wenn die Änderungen dieser Systemparameter unbekannt sind, wovon in der Regel auszugehen ist. Ursachen für die Änderung dieser Parameter können beispielsweise sein eine Änderung der Dichte des Mediums, eine Änderung des Betriebsdrucks, die Betriebszustände beim Füllen, Entleeren oder beim Betrieb mit Teilfüllung, eine Mehrphasenströmung des Mediums - wenn beispielsweise flüssige und gasförmige Medien zusammen transportiert werden - und eine Änderung der Temperatur des strömenden Mediums.

Neben diesen im wesentlichen die Strömung betreffenden Ursachen können auch Umgebungseinflüsse die interessierenden Parameter verändern, wie beispielsweise ein Temperaturgradient im Massedurchflußmeßgerät selbst, die unbeabsichtigte mechanische Berührung der schwingenden Komponenten mit feststehenden Teilen und mechanische Spannungen an den Meßrohren. Während sich einige der vorgenannten ursächlichen Parameter für eine Änderung des Systemverhaltens innerhalb von Sekunden oder sogar Sekundenbruchteilen ändern können, verändern sich andere maßgebliche Faktoren nur sehr langsam, beispielsweise über einen Zeitraum von mehreren Monaten oder Jahren hinweg; hierzu gehören beispielsweise die Erosion, Korrosion von Meßrohren wie auch Ablagerungen an den Meßrohren.

Eine Änderung der Fluiddichte bewirkt beispielsweise eine Änderung der Schwingmasse der Eigenform des Meßrohrs. Das Füllen und Entleeren des Meßrohrs sowie Mehrphasenströmungen führen zur rapiden Änderung der Dämpfung, bedingt vor allem durch Sekundärströmungen, die durch die unterschiedlichen Dichten der Mediumphasen hervorgerufen werden. Außerdem kann die Viskosität des Mediums den Dämpfungskoeffizient des Meßrohrs beeinflussen.

Die Steifigkeit der Eigenform ändert sich dahingegen hauptsächlich in Abhängigkeit von Temperatur und Temperaturgradienten sowie durch die auf das Meßrohr einwirkenden mechanischen Spannungen wie Prozeßdruck und Pulsationen in der Mediumströmung. Dazu kommt, daß sich die Parameter der Coriolis-Massedurchflußmeßgeräte durch weitere Einflußgrößen wie Ablagerungen und Abtragungen (Erosion und Korrosion) ändern.

Die vorgenannten Beispiele machen deutlich, daß es zur Erzielung eines genauen Meßergebnisses erforderlich ist, die wesentlichen systembeschreibenden Parameter des Coriolis-Massedurchflußmeßgeräts zu kennen, da ohne diese Kenntnisse und bei daraus folgender fehlerhafter Annahme der der Messung zugrundeliegenden Voraussetzungen zwangsläufig fehlerhafte Meßresultate erzielt werden.

Im Stand der Technik ist eine Vielzahl von Verfahren bekannt, um die Parameter eines Systems zu bestimmen. Wenn die Struktur des zu identifizierenden Systems feststeht, oder eben durch eine - vereinfachende - modellmäßige Annahme festgelegt worden ist, dann ist die notwendige Systemidentifikation gleichzusetzen mit der Aufgabe der Parameteridentifikation, nämlich der Identifikation der systembestimmenden Parameter des zugrundegelegten Modells.

Aus dem Stand der Technik sind grundsätzlich Verfahren zur Bestimmung von Parametern eines strukturbehafteten Systems bekannt, die im offenen Regelkreis arbeiten; derartige Identifikationsverfahren sind also nicht dazu geeignet, eine Parameteridentifikation an einem im Betrieb befindlichen Coriolis-Massedurchflußmeßgerät durchzuführen, jedenfalls nicht im geregelten Betrieb. Eine Methode der Parameteridentifikation beruht auf der Frequenzgangmessung am Coriolis-Massedurchflußmeßgerät im offenen Regelkreis mit deterministischen Signalen. Dazu wird der Schwingungserzeuger mit einem harmonischen Anregungssignal beaufschlagt und - nach Abklingen aller Einschwingvorgänge - wird die Schwingung des Meßrohrs als Ausgangssignal des Schwingungsaufnehmers nach Amplitude und Phase erfaßt. Durch Mischen des Ausgangssignals mit einem zum Anregungssignal orthogonalen Signal und nach Durchführung der vorgenannten Messung mit jeweils veränderten Meßfrequenzen ist letztlich der Frequenzgang des Coriolis-Massedurchflußmeßgeräts bzw. dessen schwingfähigen Anteils bestimmbar. Das Verfahren ist zwar sehr genau, aber extrem zeitaufwendig, da die Systemantworten aufgrund der sehr schwachen Dämpfung des Meßrohrs eines Coriolis-Massedurchflußmeßgeräts sehr langsam abklingen und entsprechend der Zeitaufwand für die Bestimmung der Parameter sehr hoch ist. Abgesehen davon, ist das Verfahren aufgrund seiner Anwendung im offenen Regelkreis für eine Online-Parameteridentifikation nicht geeignet.

Andere Verfahren beruhen auf der Parameteridentifikation durch Frequenzgangmessung mit stochastischen Signalen, wobei das Coriolis-Massedurchflußmeßgerät zur Identifizierung mit einem Rauschsignal beaufschlagt wird. Die Beschreibung der stochastischen Signale im Zeitbereich erfolgt durch Auto- und Kreuzkorrelationsfunktionen, welche die statistischen Verwandtschaftsgrade von Signalen beschreiben. Ähnlich wie bei den deterministischen Signalen wird durch Anwendung der Fourier-Transformation eine Beschreibung von stochastischen Signalen im Frequenzbereich durchgeführt. Hierzu werden die Korrelationsfunktionen der Fourier-Transformation unterzogen und auf diese Weise die korrespondierenden Leistungsspektren erhalten. Der Zusammenhang der Autokorrelationsfunktion des Ausgangssignals und der Kreuzkorrelationsfunktion zwischen Ausgangs- und Anregungssignal im Zeitbereich ist durch das Faltungsintegral mit der Gewichtsfunktion des Systems gegeben. Dadurch, daß die Faltung im Zeitbereich der Multiplikation im Frequenzbereich entspricht, kann aus dem Verhältnis der entsprechenden Leistungsspektren direkt der komplexe Frequenzgang berechnet und damit entsprechende Parameter identifiziert werden. Zwar ist dieses Verfahren im Vergleich zur Frequenzgangmessung mit deterministischen Signalen schneller aufgrund der simultanen Anregung des zu identifizierenden Massedurchflußmeßgeräts in einem weiten Frequenzbereich, jedoch ist es auch erheblich ungenauer. Aufgrund der hohen Dynamik der Coriolis-Massedurchflußmeßgeräte und aufgrund der Beeinflussung des Meßbetriebs durch die Identifikation ist dieses Verfahren während des regulären Betriebs nur mit erheblichen Einschränkungen anwendbar.

In einem aus US 2002/178803 A1 bekannten Verfahren wird zwecks Bestimmung der Resonanzfrequenz, die zur Bestimmung der Medium-Dichte verwendet wird, die Frequenz, bei der das Maximum der SchwingungsAmplitude auftritt, auf drei verschiedene Weisen bestimmt: mittels Frequenzabtastung ("frequency sweep"), mittels Frequenzverfolgung ("tracking") und durch ein iteratives Maximum-Suchverfahren.

In einem aus DE 10 2006 031198 A1 bekannten Verfahren wird als Sollgröße die Amplitude der Schwingung geregelt. Dabei werden die Antwortphase und die Änderungsgeschwindigkeit der Antwortphase erfaßt.

In einem aus DE 100 02 635 A1 bekannten Verfahren werden die, von Umgebungsbedingungen abhängigen, und somit zeitabhängigen, charakteristischen Größen Nullpunkt und Empfindlichkeit im laufenden Betrieb bestimmt. Dazu wird gemäß einem Ausführungsbeispiel eine Coriolis-Leitung in zwei Eigenformen angeregt, die dann bezüglich Auslenkung und Beschleunigung mit Hilfe eines Regelkreises entkoppelt werden.

Insgesamt ist festzustellen, daß bekannte - auch hier nicht näher dargestellte - Verfahren zur Parameteridentifikation bei Coriolis-Massedurchflußmeßgeräten nicht - oder nur mit erheblichen Einschränkungen - dazu geeignet sind, während des Betriebes des Coriolis-Massedurchflußmeßgeräts im geschlossenen Regelkreis durchgeführt zu werden.

Aufgabe der vorliegenden Erfindung ist es daher, ein verbessertes Verfahren zum Betrieb eines Resonanzmeßsystems - insbesondere eines Coriolis-Massedurchflußmeßgeräts - anzugeben, bei dem eine Identifikation von systembeschreibenden Parametern während des Betriebs - also online - im geschlossenen Regelkreis möglich ist.

Das erfindungsgemäße Verfahren zum Betreiben eines Resonanzmeßsystems, bei dem die zuvor hergeleitete und aufgezeigte Aufgabe gelöst ist, ist zunächst und im wesentlichen dadurch gekennzeichnet, daß wenigstens eine Sollgröße des geschlossenen Regelkreises in vorbestimmter Weise variiert wird und durch Auswertung wenigstens eines resultierenden Anregungssignals und/oder wenigstens eines resultierenden Antwortsignals mit Hilfe eines mathematischen Modells des Resonanzmeßsystems wenigstens ein Parameter der angeregten Eigenform selektiv identifiziert wird.

Dabei wird in vorbestimmter Weise als variierte Sollgröße des geschlossenen Regelkreises die Phase $\varphi_i$ zwischen dem Anregungssignal $F_j(t)$ und dem Antwortsignal $y_i(t)$ der jeweiligen Eigenform verwendet. Dies hat sich deshalb als besonders vorteilhaft herausgestellt, weil sich die Phase zwischen dem Anregungssignal $F_i(t)$ und dem Antwortsignal $y_i(t)$ bei vielen Resonanzmeßsystemen, insbesondere aber bei Coriolis-Massedurchflußmeßgeräten, mit hoher Dynamik ändern kann und daher auch die Dynamik eines Phasenregelkreises der jeweiligen Eigenform aufgrund der schwachen Dämpfung der Eigenform sehr hoch ist und deshalb letztlich die Soll-Trajektorie für diese Phase $\varphi_i$ mit hoher Geschwindigkeit eingeregelt werden kann, was die Identifikationszeit für den oder die interessierenden Parameter entscheidend verringert.

Das erfindungsgemäße Verfahren zum Betreiben eines Resonanzmeßsystems ist in vielerlei Hinsicht besonders vorteilhaft. Dadurch, daß die Identifikation eines Parameters der angeregten Eigenform im geschlossenen Regelkreis bestimmt wird, ist es möglich, daß der vorbestimmte Verlauf der Sollgröße - also die vorbestimmte Trajektorie dieser Sollgröße - mit hoher Dynamik und gleichzeitig geringen Abweichungen von dem vorbestimmten Verlauf eingestellt werden kann und damit die Dynamik der Parameteridentifikation insgesamt sehr hoch ist, insbesondere um Größenordnungen höher sein kann als die im offenen Regelkreis praktizierte Parameteridentifikation.

Wenn davon die Rede ist, daß ein Parameter der angeregten Eigenform "selektiv identifiziert" wird, dann ist damit gemeint, daß die Sollgröße des geschlossenen Regelkreises so vorbestimmt wird, daß die Antwort des Resonanzmeßsystems nur noch von wenigen Parametern - günstigstenfalls nur noch von einem Parameter - abhängt, das Antwortsignal also selektiv sensitiv bezüglich dieser Parameter bzw. bezüglich dieses Parameters ist. Die Selektivität bezieht sich folglich auf die Auswahl der Parameter, die einen Einfluß auf das gemessene Antwortsignal haben sollen. Durch die Vorgabe der Sollgröße und Anwendung im geschlossenen Regelkreis wird der vorbestimmte Verlauf der Sollgröße dem Resonanzmeßsystems bzw. dem Schwingelement aufgeprägt, das Anregungssignal für den Schwingungserzeuger zur Anregung des Schwingelements zu einer Schwingung in der Eigenform wird durch den geschlossenen Regelkreis quasi automatisch generiert.

In einer bevorzugten Weiterentwicklung des erfindungsgemäßen Verfahrens wird die Sollgröße während des Regelbetriebs fortwährend variiert, insbesondere wobei die Identifizierung des interessierenden Parameters - bzw. der interessierenden Parameter - der angeregten Eigenform fortwährend durchgeführt wird. Im Gegensatz zu bekannten Verfahren gestattet die Identifizierung der Parameter der Eigenform im geschlossenen Regelkreis eine Aufnahme der Parameter ohne Unterbrechung des normalen Betriebes des Resonanzmeßsystems in der zum ordnungsgemäßen Betrieb notwendigen Regelung, es ist eine fortwährend, umfassende Überwachung der relevanten Zustandsgrößen des Resonanzmeßsystems, seiner Wechselwirkung mit dem Prozeß und seiner Umgebung möglich. Der "Wechselwirkung mit dem Prozeß" entspricht bei als Coriolis-Massedurchflußmeßgerät ausgestalteten Resonanzmeßsystemen die Strömung durch das als Meßrohr ausgebildeten Schwingelements.

In einer bevorzugten Ausgestaltung der Erfindung ist die Regelung als Mehrgrößenregelung bzw. als Mehrgrößenregelkreis ausgestaltet, insbesondere für jede angeregte Eigenform, vorzugsweise für wenigstens zwei der Regelgrößen Frequenz, Phase und Amplitude der angeregten Schwingung des Schwingelements in der gewünschten Eigenform. Der Begriff Mehrgrößenregelkreis ist hier nicht einschränkend hinsichtlich irgend einer Reglerstruktur zu verstehen, vielmehr kann dies eine mehrfach verschleifte Regelung sein, in der mehr als eine Sollgröße und/oder mehr als eine Ausgangsgröße vorliegt, es kann sich um eine anderweitige Regelung handeln, in der mehrere Größen simultan beeinflußt werden, die durch die physikalische Beschaffenheit der Strecke miteinander verkoppelt sind, es kann sich dabei aber auch beispielsweise um eine Zustandsregelung handeln, die keine klassische Reglerstruktur aufweist, in der also kein direkter Vergleich von Soll- und Istwert stattfindet.

In einer bevorzugten Ausgestaltung des erfindungsgemäßen Verfahrens wird die Solltrajektorie der Sollphase zwischen wenigstens zwei Werten der Phasenwerte -45°, 0° und +45° variiert, vorzugsweise nämlich sprunghaft variiert. Vorliegend wird davon ausgegangen, daß die Phasendifferenz quasi definitionsgemäß 0° beträgt, wenn die Anregung genau mit der Eigenkreisfrequenz $\omega_{0i}$ erfolgt. Dies ist deshalb von Bedeutung, weil je nach verwendetem Anregungssignal $F_i(t)$ und verwendetem Antwortsignal $y_i(t)$ sich bei Anregung des Systems mit der Eigenkreisfrequenz $\omega_{0i}$ auch tatsächlich eine andere Phasendifferenz einstellen kann. Denkbar ist beispielsweise, daß es sich bei dem Anregungssignal $F_i(t)$ tatsächlich um eine direkt auf das Meßrohr einwirkende Kraft handelt und es sich bei dem festgestellten Antwortsignal $y_i(t)$ um ein Geschwindigkeitssignal - also um die zeitliche Ableitung der Auslenkung des Meßrohres - handelt.

Unabhängig von anderen mit einem Regelkreis eingeregelten Größen hat es sich in jedem Fall als vorteilhaft herausgestellt, wenn in einem Amplitudenregelkreis das Anregungssignal $F_i(t)$ so angepaßt wird, daß die Amplitude der Schwingung des Schwingelements im wesentlichen konstant ist, insbesondere auf einen solchen Wert eingeregelt wird, der einen deformations- und zerstörungsfreien Betrieb des Schwingelements gestattet, vorzugsweise bei größtmöglicher Amplitude der Schwingung des Schwingelements. Diese Maßnahme ermöglicht die Anpassung der Antriebsleistung an den aktuellen Zustand der jeweiligen Eigenform. Dadurch wird sichergestellt, daß die Antriebsleistung im Resonanzbereich der eingestellten Eigenform trotz einer möglichen starken zeitlichen Varianz der Eigenform nicht zu groß wird, womit eine Deformation oder sogar eine Zerstörung des Schwingelements vermieden wird; dies ist von besonderer Bedeutung bei als Coriolis-Massedurchflußmeßgerät ausgestalteten Resonanzmeßsystemen mit einem Meßrohr als Schwingelement. Außerdem wird dadurch außerhalb der Resonanzstellen sichergestellt, daß die verfügbare Antriebsleistung voll ausgenutzt wird und damit eine ausreichend hohe Anregung der Eigenformen zum Zweck der Parameteridentifikation vorhanden ist. Die Amplitudenregelung sorgt dafür, daß der Signal-Rausch-Abstand aufgrund der - im Rahmen der Verträglichkeit - maximalen Auslenkung des Schwingelements vergrößert wird und daher der interessierende Parameter der angeregten Eigenform genau bestimmbar ist.

Zum besseren Verständnis des erfindungsgemäßen Verfahrens zum Betreiben eines Resonanzmeßsystems ist es hilfreich, die hier relevanten Eigenschaften in Form einer mathematisch-physikalischen Beschreibung darzustellen, insbesondere auch deshalb, weil die Bestimmung der Parameter der angeregten Eigenform ohnehin modellbasiert erfolgen soll.

Das Schwingverhalten eines Resonanzmeßsystems kann mathematisch grundsätzlich durch eine Lagrange-Gleichung 2. Art beschrieben werden, wobei jede interessierende Eigenform der Schwingungen einen verallgemeinerten Freiheitsgrad darstellt. Nachfolgend wird die mathematische Beschreibung eines Resonanzmeßsystems am Beispiel und mit der Terminologie eines Coriolis-Massedurchflußmeßgeräts aufgezeigt, was nichts daran ändert, daß das mathematische Modell ohne weiteres auch auf andere Resonanzmeßsysteme übertragbar ist. Bei Coriolis-Massedurchflußmeßgeräten entspricht eine Schwingung in der ersten Eigenform beispielsweise der gleichphasigen, translatorischen Bewegung der Massen des Meß- bzw. Trägerrohres. Eine Rotation der Massen um den Mittelpunkt der Meßrohre entspricht einer Schwingung in der zweiten Eigenform. Das Differentialgleichungssystem für alle betrachteten n Eigenformen lautet allgemein:

$$M\ddot{\underline{x}}(t) + D\dot{\underline{x}}(t) + C\underline{x}(t) = \underline{F}(t);  \qquad \text{(Glg. 1)}$$

dabei sind M die Trägheitsmatrix, D die Dämpfungsmatrix, C die Steifigkeitsmatrix und $\underline{F}$ das Anregungssignal in Form einer Kraftanregung.

Die Anwendung der Fourier-Transformation auf Glg. 1 für die Anfangsbedingungen $\underline{x}(0) = 0$ bewirkt eine Algebraisierung der Bewegungsgleichungen. Werden zur Erfassung der Bewegung des Resonanzmeßsystems z. B. Geschwindigkeitssensoren (z.B. Magnet/Spule) für die Messung der Bewegungen verwendet, dann ist $\dot{\underline{x}}(t)$ der gemessene Antwortvektor und der Frequenzgang des Resonanzmeßsystems lautet:

$$G(j\omega) = \frac{V(j\omega)}{F(j\omega)} = \frac{j\omega}{-\omega^2 M + j\omega D + C}.  \qquad \text{(Glg. 2)}$$

Sinngemäßes gilt, wenn als Schwingungsaufnehmer Auslenkungs- oder Beschleunigungssensoren verwendet werden. Mit den Gleichungen 1 und 2 ist das physikalisch-mathematische Modell des interessierenden Teils des Coriolis-Massedurchflußmeßgeräts gegeben, zum einen im Zeitbereich, zum anderen im Frequenzbereich, dessen Parameter in der Trägheitsmatrix M der Dämpfungsmatrix D und der Steifigkeitsmatrix C enthalten sind. Diese Parameter sind zu bestimmen, da sie eine Auskunft über die interessierenden Eigenschaften des Systems geben. Ganz allgemein sind also die Elemente des folgenden Vektors gesucht:

$$\underline{\theta} = f(M, D, C).  \qquad \text{(Glg. 3)}$$

Gemäß einer bevorzugten Ausgestaltung der Erfindung wird als mathematisches Modell für das Coriolis-Massedurchflußmeßgerät bzw. für das schwingfähige Meßrohr ein analytisches mechanisches Modell für jede angeregte Eigenform verwendet. Mögliche Kopplungen der Eigenform werden durch Elemente der Matrizen *M,D,C* außerhalb der Hauptdiagonalen charakterisiert. Die Parameter und ihre physikalische Bedeutung, insbesondere für die Kopplung, lassen sind anhand der ausgeschriebenen Bewegungsgleichungen für die erste und die zweite Eigenform eines Coriolis-Meßrohres veranschaulichen:

$$\underbrace{\begin{bmatrix} m_1 & k_{b21} \\ k_{b12} & m_2 \end{bmatrix}}_{M} \underbrace{\begin{bmatrix} \ddot{x}_1 \\ \ddot{x}_2 \end{bmatrix}}_{\underline{\ddot{x}}(t)} + \underbrace{\begin{bmatrix} d_1 & k_{v21} + k_{cor21} \\ k_{v12} + k_{cor12} & d_2 \end{bmatrix}}_{D} \underbrace{\begin{bmatrix} \dot{x}_1 \\ \dot{x}_2 \end{bmatrix}}_{\underline{\dot{x}}(t)} + \underbrace{\begin{bmatrix} c_1 & k_{s21} \\ k_{s12} & c_2 \end{bmatrix}}_{C} \underbrace{\begin{bmatrix} x_1 \\ x_2 \end{bmatrix}}_{\underline{x}(t)} = \underbrace{\begin{bmatrix} F_1 \\ F_2 \end{bmatrix}}_{\underline{F}(t)} \qquad \text{(Glg. 4)}$$

Dabei ist $m_i$ die Schwingmasse der jeweiligen Eigenform, $d_i$ die Dämpfungskonstante der jeweiligen Eigenform, $c_i$ die Federkonstante der jeweiligen Eigenform, $k_{xxx}$ sind Beschleunigung-, Geschwindigkeit- und Weg-Kopplung der Eigenformen ($k_{corxx}$ sind geschwindigkeitsproportionale Kopplungen, die proportional dem Massestrom sind) und $F_i$ ist die Anregungskraft der jeweiligen Eigenform.

Das erfindungsgemäße Verfahren zum Betreiben eines Coriolis-Massedurchflußmeßgeräts ist nicht auf eine modellhafte Beschreibung der angeregten Eigenformen gemäß den vorstehenden Gleichungen beschränkt, vielmehr läßt sich das Verfahren auf alle zutreffenden physikalischmathematischen Modelle des Coriolis-Massedurchflußmeßgeräts sinngemäß anwenden.

Die Kopplungen der Eigenformen kommen durch die Elemente der Matrizen $M, D$ und $C$ außerhalb der Hauptdiagonalen zustande. Die Kopplungen kommen physikalisch/konstruktiv entweder durch eine nicht beabsichtigte Asymmetrie im Aufbau des Coriolis-Massedurchflußmeßgeräts oder durch einen Massestrom zustande. Diese für die Kopplung verantwortlichen Elemente werden aus den Differenzen der Schwingmassen und Dämpfungs- und Federkonstanten der Meßrohrhälften gebildet und sind üblicherweise gegenüber den entsprechenden Parametern $m_i$, $d_i$ und $c_i$ sehr klein.

Zu Gunsten der Einfachheit werden im Falle mehrere angeregter Eigenformen zur selektiven Bestimmung der Parameter der Eigenformen zunächst die Kopplungen der Eigenformen vernachlässigt, wodurch die Matrizen $M$, $D$ und $C$ zu Diagonalmatrizen werden. Dann lassen sich die einzelnen Eigenformen jeweils durch eine Übertragungsfunktion zweiter Ordnung beschreiben, weshalb die Übertragungsfunktion der i-ten Eigenform lautet:

$$G_i(j\omega) = \frac{V_i(j\omega)}{F_i(j\omega)} = \frac{j\omega}{-\omega^2 m_i + j\omega d_i + c_i}. \qquad \text{(Glg. 5)}$$

Die Übertragungsfunktion für die i-te Eigenform gemäß Gleichung 5 besitzt drei Parameter, die durch die Federkonstante $c_i$, die schwingende Masse $m_i$ und den Dämpfungskoeffizienten $d_i$ bestimmt sind.

Eine für die selektive Identifikation geschickte Art der Anregung des Meßrohrs zu Schwingungen in den jeweiligen Eigenformen ist die vorbestimmte Variation und Vorgabe der Phase $\varphi_i$ zwischen dem Anregungssignal $F_i(t)$ und dem Antwortsignal $y_i(t)$, wobei in einer bevorzugten Ausgestaltung der Erfindung die Solltrajektorie der Sollphase $\varphi_{i,soll}$ zwischen wenigstens zwei Werten der Phasenwerte -45°, 0° und +45° variiert wird, vorzugsweise sprunghaft variiert wird. Die Sollphase kann in ihrer zeitlichen Abfolge beispielsweise die Werte 0°, +45°, 0°, -45°, 0° etc. annehmen, wobei die Sollphase jeweils eine vorgegebene Zeit auf dem jeweiligen Wert verharrt und dann sprungförmig auf den nächsten Wert variiert wird. Die Wahl einer Solltrajektorie ausgerechnet für die Phase ist deshalb bevorzugt, weil die Eigenformen sehr schwach gedämpft sind und die Phasenverläufe in der Nähe der Eigenfrequenzen (Phasenwert 0°) sehr steil am Wendepunkt einer trigonometrischen arctan-Funktion verlaufen und die korrespondierenden Phasenregelungen demzufolge sehr schnell sind.

Dem vorangehenden Beispiel folgend, werden die Übertragungsfunktionen der Eigenformen gemäß Gleichung 5 nur für die drei eingeschwungenen Phasen -45°, 0° und +45° ausgewertet, wozu sich die nachstehend angegebene umgeformte Übertragungsfunktion anbietet:

$$j\omega m_i + d_i - j\frac{c_i}{\omega} = \frac{1}{|G_i(j\omega)|}e^{-j\varphi_i} \qquad \text{(Glg. 6)}$$

Für die drei Phasen -45°, 0° und +45° ergeben sich dann die folgenden Zusammenhänge:

$$\varphi_{i,soll} = 45° \Rightarrow \qquad j\omega_{0i,45}m_i + d_i - j\frac{c_i}{\omega_{0i,45}} = \frac{1}{|G_i(j\omega_{0i,45})|}e^{-j45}, \qquad \text{(Glg. 7)}$$

$$\varphi_{i,soll} = 0° \Rightarrow \qquad j\omega_{0i}m_i + d_i - j\frac{c_i}{\omega_{0i}} = \frac{1}{|G_i(j\omega_{0i})|}e^{-j0} \text{ und} \qquad \text{(Glg. 8)}$$

$$\varphi_{i,soll} = -45° \Rightarrow \qquad j\omega_{0i_{-45}}m_i + d_i - j\frac{c_i}{\omega_{0i_{-45}}} = \frac{1}{|G_i(j\omega_{0i_{-45}})|}e^{j45}. \qquad \text{(Glg. 9)}$$

Anhand der vorstehenden Gleichungen ist zu erkennen, daß die Sollphasen $\varphi_{i,soll}$ der jeweiligen Eigenform durch Variation der Frequenz der angeregten Schwingung erzielt wird, vorliegend vorzugsweise durch Variation der Frequenz des Anregungssignals um die Eigenkreisfrequenz $\omega_{0i}$, wobei hier insbesondere die zur Erzielung der jeweiligen Sollphase $\varphi_{i,soll}$ eingestellte Phasenkreisfrequenz $\omega_{0i-45°}$ und $\omega_{0i+45°}$ zur Ermittlung eines Parameters der angeregten Eigenform herangezogen wird.

Anhand Gleichung 8 ist zu erkennen, daß bei einer Vorgabe für die Phase $\varphi_i$ von 0° eine sehr gute selektive Anregung bezüglich des Parameters $d_i$ gegeben ist, da die rechte Seite der Gleichung 8 reellwertig ist, wodurch sich der Dämpfungsparameter $d_i$ direkt aus den gemessenen Anregungssignalen und Antwortsignalen berechnen läßt und zwar zu:

$$d_i = \frac{1}{|G_i(j\omega_{0i})|}e^{-j0} = \frac{|F_i(j\omega_{0i})|}{|V_i(j\omega_{0i})|} \qquad \text{(Glg. 10)}$$

Bezüglich der Anregung des Schwingelements bzw. des Meßrohrs mit eingeregelten Phasenwerten von -45° und +45° zwischen dem Anregungssignal und dem Antwortsignal weisen die Gleichungen 7 und 9 ebenfalls besondere Eigenschaften auf, die die Anregung bezüglich des Parameters der Dämpfung ebenfalls wiederum als selektiv erscheinen läßt. In beiden Gleichungen sind bei diesen speziellen Anregungen die Beträge der Real- und der Imaginärteile gleich. Damit läßt sich der Dämpfungsparameter $d_i$ wiederum direkt aus den Gleichungen 7 und 9, wie nachfolgend angegeben, berechnen:

$$d_i = \frac{\sqrt{2}}{2}\frac{|F_i(j\omega_{0i_{-45}})|}{|V_i(j\omega_{0i_{-45}})|} \text{ oder} \qquad \text{(Glg. 11)}$$

$$d_i = \frac{\sqrt{2}}{2}\frac{|F_i(j\omega_{0i_{-45}})|}{|V_i(j\omega_{0i_{-45}})|} \qquad \text{(Glg. 12)}$$

Aufgrund der einfachen selektiven Bestimmung der Dämpfung als Parameter wird in einer bevorzugten Ausgestaltung des erfindungsgemäßen Verfahrens vorgesehen, daß die Dämpfung als erster Parameter selektiv identifiziert wird, so daß weitere Parameter in Kenntnis der ermittelten Dämpfung einfacher bestimmt werden können.

Die Parameter $m_i$ und $c_i$ lassen sich mittels der Gleichungen 7 bis 9 und den zugehörigen, sich zur Herstellung der jeweiligen Soll-Phasenlage notwendigen Frequenzen - Eigenkreisfrequenz $\omega_{0i}$ und Phasenkreisfrequenzen $\omega_{0i-45}$ und $\omega_{0i+45}$ -, gemäß den nachfolgenden Gleichungen bestimmen

$$m_i = \frac{1}{\omega_{0i_{-45}} - \omega_{0i_{-45}}}d_i \text{ und} \qquad \text{(Glg. 13)}$$

$$c_i = \frac{\omega_{0i_{-45}}\omega_{0i_{-45}}}{\omega_{0i_{-45}} - \omega_{0i_{-45}}}d_i. \qquad \text{(Glg. 14)}$$

Alternativ ist auch eine Bestimmung der Federkonstanten $c_i$ der jeweiligen Eigenform anhand der gemessenen Anregungs- und Antwortsignale ermittelbar und zwar nach den nachfolgenden Zusammenhängen:

$$c_i = \frac{\omega_{0i_{+45}}\omega_{0i_{-45}}}{\omega_{0i_{-45}} - \omega_{0i_{+45}}}\frac{|F_i(j\omega_{0i})|}{|V_i(j\omega_{0i})|}, \qquad \text{(Glg. 15)}$$

$$c_i = \frac{\sqrt{2}}{2}\frac{\omega_{0i}^2\omega_{0i_{+45}}}{\omega_{0i}^2 - \omega_{0i_{+45}}^2}\frac{|F_i(j\omega_{0i_{+45}})|}{|V_i(j\omega_{0i_{+45}})|} \quad \text{oder} \qquad \text{(Glg. 16)}$$

$$c_i = -\frac{\sqrt{2}}{2}\frac{\omega_{0i}^2\omega_{0i_{-45}}}{\omega_{0i}^2 - \omega_{0i_{-45}}^2}\frac{|F_i(j\omega_{0i_{-45}})|}{|V_i(j\omega_{0i_{-45}})|}. \qquad \text{(Glg. 17)}$$

Sinngemäß ist auch der Parameter der Schwingmasse $m_i$ aus den gemessenen Anregungs- und Antwortsignalen bei den vorgegebenen Sollphasen ermittelbar, beispielsweise durch:

$$m_i = \frac{1}{\omega_{0i_{-45}} - \omega_{0i_{+45}}}\frac{|F_i(j\omega_{0i})|}{|V_i(j\omega_{0i})|}, \qquad \text{(Glg. 18)}$$

$$m_i = \frac{\sqrt{2}}{2}\frac{\omega_{0i_{+45}}}{\omega_{0i}^2 - \omega_{0i_{+45}}^2}\frac{|F_i(j\omega_{0i_{+45}})|}{|V_i(j\omega_{0i_{+45}})|} \quad \text{oder} \qquad \text{(Glg. 19)}$$

$$m_i = -\frac{\sqrt{2}}{2}\frac{\omega_{0i_{-45}}}{\omega_{0i}^2 - \omega_{0i_{-45}}^2}\frac{|F_i(j\omega_{0i_{-45}})|}{|V_i(j\omega_{0i_{-45}})|}. \qquad \text{(Glg. 20)}$$

Bei bevorzugten Ausgestaltungen der Erfindung erfolgt die selektive Identifizierung des jeweils interessierenden Parameters der angeregten Eigenformen im eingeschwungenen Zustand, da dies die Auswertung allgemein erleichtert. Dies ist vorteilhaft insbesondere dann möglich, wenn als variierte Sollgröße die Phase zwischen dem Anregungssignal und dem Antwortsignal der jeweiligen Eigenform verwendet wird, da sich die Phase aufgrund der eingangs beschriebenen Zusammenhänge sehr dynamisch ändern kann und daher mit einer hohen Regelgeschwindigkeit einstellbar ist.

Die vorstehend gleichungsmäßig erläuterten Beispiele für eine selektive Identifizierung eines Parameters der angeregten Eigenform stehen nur stellvertretend für andere Möglichkeiten der selektiven Identifizierung interessierender Parameter einer angeregten Eigenform. So ist das erfindungsgemäße Verfahren ganz allgemein weder beschränkt auf die vorbestimmte Variation der Phase zwischen Anregungssignal und Antwortsignal des Schwingelements bzw. des Meßrohres, genauso wenig wie auf die hier beispielhaft genannten Werte -45°, 0° und +45° der eingestellten Phase, noch auf die Auswertung lediglich stationär eingestellter Werte. Es gibt weitere vorteilharte Werte als Vorgabe für die Phase zwischen Anregungssignal und Antwortsignal, die eine selektive Identifikation von Parametern der angeregten Eigenform gestatten, genauso wie auch die Auswertung transienter, also noch im Übergang befindlicher Vorgänge für die selektive online Parameteridentifikation möglich sind.

Ein besonderer Vorteil des erfindungsgemäßen Verfahrens liegt auch darin, daß die Ermittlung von Parametern der angeregten Eigenform während des in der Regelung befindlichen Betriebes des Coriolis-Massedurchflußmeßgerät zusätzlich auch eine weitergehende Analyse des Zustandes des Coriolis-Mässedurchflußmeßgeräts gestattet. So wird in einer Weiterentwicklung des erfindungsgemäßen Verfahrens aus den selektiv identifizierten Parametern wenigstens ein abgeleiteter Parameter identifiziert, insbesondere ein Strömungsparameter wie Massedurchfluß, Dichte, Druck, Viskosität, Mehrphasenströmung und/oder ein Geräteparameter für Erosion, Korrosion, Ablagerung, Teilfüllung und mechanische Berührung der schwingenden Komponenten mit feststehenden Teilen und/oder ein Umgebungsparameter wie die Pulsation einer Pumpe während des Betriebs des Coriolis-Massedurchflußmeßgeräts.

Neben den vorgenannten Parametern kann als interessierender Parameter auch die Eigenkreisfrequenz $\omega_{0i}$ der jeweiligen Eigenform bestimmt werden, wobei die ermittelte Eigenkreisfrequenz $\omega_{0i}$ insbesondere bei der Anregung des Meßrohrs zur Schwingung in der korrespondierenden Eigenform berücksichtigt wird.

Ein besonders aussagekräftiger abgeleiteter Parameter für ein schwingfähiges System ist dessen Güte. In einer vorteilhaften Ausgestaltung des erfindungsgemäßen Verfahrens wird daher als abgeleiteter Parameter der Güte-Faktor $Q_i$ der angeregten Eigenform des Meßrohrs bestimmt, wobei ganz allgemein der Güte-Faktor $Q_i$ gegeben ist durch das Verhältnis der in ihm gespeicherten Energie zu der pro Periode dissipierten - also verlorenen - Energie:

$$Q = 2\pi \frac{E_{gesp.}(t)}{E_{Verlust}(t)}. \qquad \text{(Glg. 21)}$$

Angewendet auf das Meßrohr eines Coriolis-Massedurchflußmeßgeräts, das zur Schwingung in einer Eigenform angeregt wird, ergibt sich auf Grundlage des zuvor erläuterten Modellansatzes ohne Berücksichtigung der Kopplung der folgende Zusammenhang für den Güte-Faktor:

$$Q_i = 2\pi \frac{E_{gesp.}(\omega_{0i})}{E_{Verlust}(\omega_{0i})} = \frac{m_i \omega_{0i}}{d_i}. \qquad \text{(Glg. 22)}$$

Gemäß Gleichung 22 wird der Güte-Faktor $Q_i$ der angeregten Eigenform aus den Werten für die schwingende Masse $m_i$, die Dämpfung $d_i$ und die Eigenkreisfrequenz $\omega_{0i}$ der angeregten Eigenform ermittelt. Wenn die schwingende Masse $m_i$ und die Dämpfung $d_i$ durch die oben angegebenen Bestimmungsgleichungen ersetzt werden, werden die nachfolgenden Bestimmungsgleichungen für die Güte-Faktoren der Eigenformen erhalten, die ausschließlich von der Eigenkreisfrequenz $\omega_{0i}$ und den Phasenkreisfrequenzen $\omega_{0i_{-45}}$ und $\omega_{0i_{+45}}$ abhängen:

$$Q_i = \frac{\omega_{0i}}{\omega_{0i_{-45}} - \omega_{0i_{+45}}}, \qquad \text{(Glg. 23)}$$

$$Q_i = \frac{\omega_{0i}\omega_{0i_{+45}}}{\omega_{0i}^2 - \omega_{0i_{+45}}^2} \quad \text{oder} \qquad \text{(Glg. 24)}$$

$$Q_i = -\frac{\omega_{0i}\omega_{0i_{-45}}}{\omega_{0i}^2 - \omega_{0i_{-45}}^2}. \qquad \text{(Glg. 25)}$$

Gemäß den vorstehenden Bestimmungsgleichungen läßt sich der Güte-Faktor $Q_i$ der angeregten Eigenform also auch bestimmen aus dem Verhältnis der ermittelten Eigenkreisfrequenz $\omega_{0i}$ zur Bandbreite der ermittelten Phasenkreisfrequenzen - Differenz der ermittelten Phasenkreisfrequenzen - oder aus einer anderen geeigneten Kombination aus dem Wert für die Eigenkreisfrequenz $\omega_{0i}$ und wenigstens einem ermittelten Wert für eine Phasenkreisfrequenz. Hervorzuheben ist hier, daß die Bestimmung der Güte-Faktoren der angeregten Eigenformen unabhängig von den Eigenschaften der Meß- und Stellglieder ist, da die Gleichungen 23 bis 25 keine Werte der gemessenen Anregungs- und Antwortsignale enthalten und die Phasenverschiebung durch die Meßglieder vernachlässigbar klein sind.

Die berechneten Güte-Faktoren $Q_i$ können sowohl für die Korrektur der Strömungsparameter verwendet werden als auch zur Quantifizierung des Zustandes des Durchflußmeßgeräts in seinem gesamten Lebenszyklus von der Produktion bis zur Ausmusterung. Als aussagefähiger abgeleiteter Systemparameter kann der ermittelte Güte-Faktor $Q_i$ außerdem zum Zweck der Diagnose beispielsweise in der Instandhaltung herangezogen werden. Die Gleichungen 23 bis 25 für die Berechnung der Güte-Faktoren $Q_i$ liefern im Falle der Stationarität des Coriolis-Massedurchflußmeßgeräts - also wenn alle Parameter der Eigenformen konstant sind - identische Ergebnisse. Ist das Coriolis-Massedurchflußmeßgerät aufgrund von Umgebungs- und/oder Prozeßeinflüssen, wie z.B. der Temperatur, nicht stationär, so liefert Gleichung 23 einen Mittelwert für den Güte-Faktor $Q_i$ der angeregten Eigenform und die Differenz der Gleichungen 24 und 25 gemäß Gleichung 26 ein Maß für die Instationarität des Coriolis-Massedurchflußmeßgeräts:

$$I_M = \frac{\omega_{0i}\omega_{0i_{+45}}}{\omega_{0i}^2 - \omega_{0i_{+45}}^2} + \frac{\omega_{0i}\omega_{0i_{-45}}}{\omega_{0i}^2 - \omega_{0i_{-45}}^2}. \qquad \text{(Glg. 26)}$$

Die Instationarität kann beispielsweise durch verschiedene Parametervariationen - beispielsweise in Folge von Temperatureinflüssen - oder durch Inhomogenitäten in der Strömung zustande kommen.

Insgesamt können die so berechneten Güte-Faktoren $Q_i$ sowohl verwendet werden für die Korrektur der Strömungsparameter als auch zur Einstellung - Balancierung - des Coriolis-Massedurchflußmeßgeräts in bestimmten Phasen der Produktion - z. B. bei der Kalibrierung - oder in der Anwendung, beispielsweise zur Detektion von Luftblasen, oder bei der Diagnose, beispielsweise zur Erkennung eines Kontakts der Schwingungskomponenten mit der Aufhängung.

Das erfindungsgemäße Verfahren gestattet in einer weiteren vorteilhaften Ausgestaltung auch die Identifikation der Parameter für die Coriolis-Kopplung $k_{Cor12}$ und/oder für die Beschleunigungskopplung $k_{b12}$ der ersten angeregten Eigenform auf die zweite angeregte Eigenform, wobei die Parameter insbesondere frequenz- und phasenselektiv identifiziert werden.

Zur Identifizierung der Coriolis-Kopplung $k_{Cor12}$ und der Beschleunigungskopplung $k_{b12}$ von der ersten Eigenform auf die zweite Eigenform wird zunächst davon ausgegangen, daß die Kopplungen der Bewegungen der zweiten Eigenform auf die erste Eigenform aufgrund der erzwungenen Anregung der ersten Eigenform näherungsweise vernachlässigt werden können. Die Bestimmungsgleichungen lauten dann:

$$j(\omega m_1 - \frac{c_1}{\omega}) + d_1 = \frac{F_1}{V_1}$$

$$(j\omega k_{b12} + k_{cor12})V_1 + (j(\omega m_2 - \frac{c_2}{\omega}) + d_2)V_2 = F_2 \qquad \text{(Glg. 27)}$$

Die erste durch den Parameter $k_{Cor12}$ beschriebene Kopplung - Coriolis-Kopplung - ist für die Massedurchflußmessung maßgebend und die zweite, durch den Parameter $k_{b12}$ beschriebene Kopplung - Beschleunigungskopplung - beschreibt die Asymmetrie der Massen der beiden Meßrohrhälften, unabhängig davon, wie die Asymmetrie der Massen zustande gekommen ist. Diese Kopplung ist ein Qualitätsmerkmal für die Ausgewogenheit des Meßrohres und kann zur Balancierung der zweiten Eigenform des Coriolis-Massedurchflußmeßgeräts verwendet werden. Zur Bestimmung der beiden Kopplungen werden die erste und die zweite Eigenform des Meßrohrs - beispielsweise mit den zuvor dargestellten Phasenverläufen - angeregt und die Antwortsignale frequenz- und phasenselektiv ausgewertet. Die Parameter für die jeweiligen Schwingmassen $m_1$, $m_2$, die Dämpfungen $d_1$, $d_2$ und die Steifigkeiten $c_1$, $c_2$ lassen sich beispielsweise bestimmen mit den oben dargestellten Gleichungen (Gleichungen 10 bis 20). Die Bestimmungsgleichungen für die Parameter der Kopplungen $k_{cor12}$ und $k_{b12}$ ergeben sich aus dem Zusammenhang gemäß Gleichung 28:

$$(j\omega_{01}k_{b12} + k_{cor12})V_1(j\omega_{01}) + (j(\omega_{01}m_1 - \frac{c_2}{\omega_{01}}) + d_2)V_2(j\omega_{01}) = 0. \qquad \text{(Glg. 28)}$$

Aus diesem Zusammenhang können zwei Bestimmungsgleichungen erhalten werden, wenn die Real- und Imaginärteile der gemessenen Größen eingesetzt werden:

$$k_{cor12} = (\omega_{01}m_2 - \frac{c_2}{\omega_{01}})\frac{V_{2\text{Im}\omega_{01}}}{V_{1\text{Re}\omega_{01}}} - d_2\frac{V_{2\text{Re}\omega_{01}}}{V_{1\text{Re}\omega_{01}}}$$

$$k_{b12} = -(m_2 - \frac{c_2}{\omega_{01}^2})\frac{V_{2\text{Re}\omega_{01}}}{V_{1\text{Re}\omega_{01}}} - \frac{d_2}{\omega_{01}}\frac{V_{2\text{Im}\omega_{01}}}{V_{1\text{Re}\omega_{01}}} \qquad \text{(Glg. 29)}$$

Dabei ist $V_{1\text{Re}\omega_{01}}$ der Realteil der Geschwindigkeit der ersten Eigenform bei der Resonanzfrequenz der ersten Eigenform, und $V_{2\text{Re}\omega_{01}}$ ist der Realteil und $V_{2\text{Im}\omega_{01}}$ ist der Imaginärteil der Geschwindigkeit der zweiten Eigenform bei der Resonanzfrequenz der ersten Eigenform.

Bei einer bevorzugten Ausgestaltung der Erfindung wird vorgesehen, daß Gleichung 29 auch bei der Resonanzfrequenz der ersten Eigenform mit einer Phase von +/-45° ausgewertet wird, so daß jeweils zwei weitere Bestimmungsgleichungen für die Kopplungen erhalten werden. Die aus den verschiedenen Bestimmungsgleichungen erhaltenen Werte für die Kopplungen können durch Mittelwertbildung zu gewichteten Mittelwerten der Kopplungen zusammengefaßt werden.

Einleitend ist bereits dargestellt worden, daß die identifizierten Parameter bei bestimmten Ausgestaltungen des Verfahrens dazu verwendet werden, verschiedene abgeleitete Parameter zu ermitteln, nämlich Strömungsparameter, Geräteparameter und/oder Umgebungsparameter.

Als Indikator für eine symmetrische Korrosion und Erosion werden in einer bevorzugten Ausgestaltung des Verfahrens die Steifigkeiten der Eigenformen gemäß den Gleichungen 15 bis 17 genutzt. Eine asymmetrische Ablagerung der Meßrohre wird gemäß einer weiteren Weiterentwicklung des Verfahrens über Beschleunigungskopplungen - beispielsweise über den Parameter $k_{b12}$ nach Gleichung 29 - bestimmt. Asymmetrische Korrosion und Erosion werden ferner über die Identifikation der auslenkungsproportionalen Kopplungen der Eigenformen - beispielsweise über den Parameter $k_{s12}$ - bestimmt.

Das zuvor beschriebene Verfahren zum Betrieb eines Coriolis-Massedurchflußmeßgeräts mit einer online-Parameter-Identifikation läßt sich beliebig erweitern. In einer weiteren Ausgestaltung des Verfahrens ist beispielsweise vorgesehen, daß zur Bestimmung aller Parameter der ersten und der zweiten Eigenform die erste und die zweite Eigenform mit den beschriebenen Soll-Phasenverläufen - sprungförmige Variation der Werte für die Sollphasen - angeregt werden und alle Antwortsignale frequenz- und phasenselektiv ausgewertet werden. Dabei ergeben sich aus den von der vorhergehenden Darstellung insgesamt 24 Bestimmungsgleichungen für alle Parameter der ersten und der zweiten Eigenform. Hieraus können die interessierenden Parameter mit verschiedenen Algorithmen berechnet werden, in einer bevorzugten Ausgestaltung beispielsweise mit dem Rekursive Least Square-Verfahren (RLS).

Wie bereits angedeutet worden ist, können auch andere Trajektorien für die Phasen, Amplituden und ganz allgemein für die Ausgangssignale der jeweiligen Eigenform realisiert werden, wobei auch nicht nur stationäre Zustände der Anregungssignale und der Ausgangssignale ausgewertet werden können, sondern vielmehr können auch die in der Dynamik der Anregungs- und Antwortsignale enthaltenen Informationen mittels verschiedener Algorithmen zur selektiven Parameteridentifikation herangezogen werden, wie beispielsweise das erweiterte Kalman-Filter (EKF) oder das Moving-Horizon-Verfahren.

Die hergeleitete Aufgabe wird ferner bei dem eingangs beschriebenen Coriolis-Massedurchflußmeßgerät dadurch gelöst, daß dieses Coriolis-Massedurchflußmeßgerät so ausgestaltet ist, daß es mit einem der zuvor beschriebenen Verfahren betrieben werden kann.

Im einzelnen gibt es nun verschiedene Möglichkeiten, das erfindungsgemäße Verfahren auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1    die schematische Darstellung eines als Coriolis-Massedurchflußmeßgerät ausgestalteten Resonanzmeßsystems mit angedeuteten Ersatzschaltgrößen zur Modellbildung,

Fig. 2    ein mechanisches Ersatzschaltbild mit konzentrierten Parametern in Form eines Feder-Masse-Systems des in Fig. 1 dargestellten Coriolis-Massedurchflußmeßgeräts als mathematisch-physikalisches Modell,

Fig. 3    eine schematische Darstellung des erfindungsgemäßen Verfahrens zum geregelten Betrieb eines Coriolis-Massedurchflußmeßgeräts in Form eines Blockschaltbildes,

Fig. 4    eine weitere Darstellung des erfindungsgemäßen Verfahrens in Form eines Blockschaltbildes, gestützt auf Fig. 3, mit die Parameteridentifikation betreffenden Ergänzungen.

Fig. 5    der exemplarische Verlauf der Soll-Trajektorie zur Variation der Phase zwischen einem Anregungssignal und einem Antwortsignal als Sollgröße des geschlossenen Regelkreises.

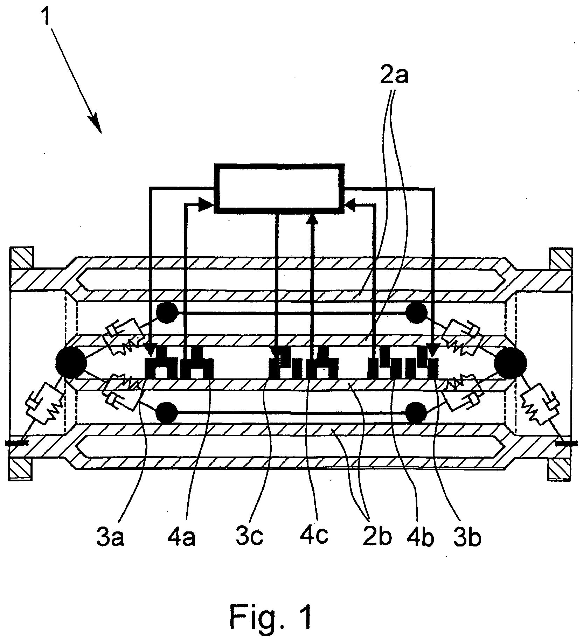

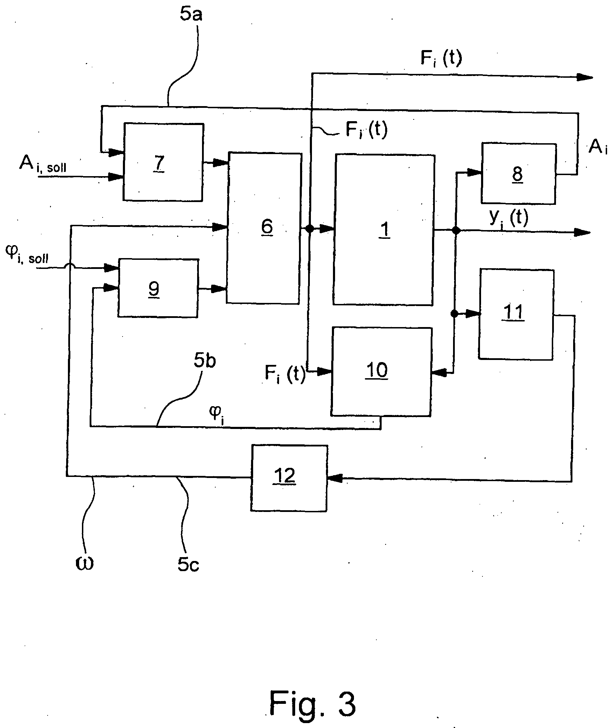

Fig. 1 zeigt die schematische Darstellung eines Coriolis-Massedurchflußmeßgeräts 1, das hier stellvertretend für ein allgemeines Resonanzmeßsystem behandelt wird und das mit dem hier in Rede stehenden Verfahren betrieben wird. Das Coriolis-Massedurchflußmeßgerät 1 verfügt vorliegend über zwei im wesentlichen mit dem Mediumstrom wechselwirkende Meßrohre 2a, 2b als Schwingelemente, drei Schwingungserzeuger 3a, 3b, 3c und drei Schwingungsaufnehmer 4a, 4b, 4c. Die Meßrohre 2a, 2b werden durch die Schwingungserzeuger 3a, 3b, 3c in einer Regelung in einem - erst in Figur 3 näher dargestellten - Regelkreis durch den von einem Anregungssignal $F_i(t)$ angeregten Schwingungserzeugern 3a, 3b, 3c zur Schwingung in wenigstens einer Eigenform angeregt, und die angeregte Schwingung des Meßrohrs 2a, 2b wird von den Schwingungsaufnehmern 4a, 4b, 4c als ein Antwortsignal $y_i(t)$ bzw. als Mehrzahl von Antwortsignalen $\underline{y}_i(t)$ erfaßt. Die erste Eigenform der angeregten Schwingungen besteht bei den Meßrohren 2a, 2b in einer lediglich einen Bauch ausbildenden Schwingung und besteht in einer zweiten Eigenform in einer Schwingung, bei der zusätzlich ein mittlerer Knotenpunkt der Schwingung ausgebildet ist.

Die Anzahl der Schwingungserzeuger 3a, 3b, 3c und der Schwingungsaufnehmer 4a, 4b, 4c hängt allgemein davon ab, welche Eigenformen der Schwingung der Meßrohre 2a, 2b anregbar und beobachtbar sein soll. Die in Fig. 1 dargestellte Anordnung ermöglicht es jedenfalls, die Coriolis-Meßrohre in einer ersten Eigenform und in einer zweiten Eigenform der Schwingung anzuregen und diese Schwingungen zu beobachten.

Ein hier nicht explizit dargestellter Mediumstrom wird von den Meßrohren 2a, 2b, geführt, wobei das massebehaftete Medium aufgrund der durch die Schwingung der Meßrohre 2a, 2b entstehenden Coriolis-Kräfte auf die Meßrohre 2a, 2b rückwirkt. Der Massedurchfluß kann bestimmt werden über die Messung einer Zeitdifferenz der Schwingung in der jeweiligen Eigenform im ein- und auslaufseitigen Bereich der Meßrohre 2a, 2b.

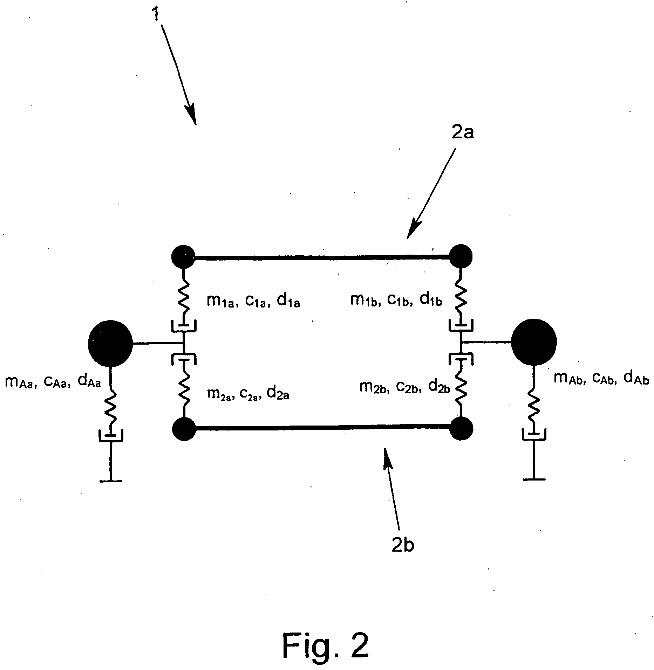

In Fig. 1 ist neben der Struktur des Coriolis-Massedurchflußmeßgeräts 1 auch überlagert angedeutet das korrespondierende Feder-Masse-Ersatzschaltbild. Angedeutet sind die Massen der Meßrohre 2a, 2b des zusammenführenden Flansches. Die federnden Ankopplungen der Massen untereinander sind durch Feder-Dämpfer-Elemente symbolisiert. Das in Fig. 1 angedeutete Feder-Masse-Ersatzschaltbild des Coriolis-Massedurchflußmeßgeräts 1 bzw. der schwingenden Meßrohre 2a, 2b ist in Fig. 2 nochmals deutlich mit Formelzeichen dargestellt.

In Fig. 1 ist durch die mit einem Richtungssinn versehenen Signallinien angedeutet, daß die Anregungssignale $F_i(t)$ und die von den Schwingungsaufnehmern 4a, 4b, 4c erzeugten Antwortsignale $y_i(t)$ zwischen einer nicht näher bezeichneten zentralen Steuereinheit des Coriolis-Massedurchflußmeßgeräts 1 und den Schwingungserzeugern 3a, 3b, 3c einerseits und den Schwingungsaufnehmern 4a, 4b, 4c andererseits ausgetauscht werden können.

Als Parameter des in Fig. 2 graphisch dargestellten mathematisch-physikalischen Modells treten die schwingfähigen Massen m, die Dämpfungen d und die Steifigkeitsparameter c auf. Eine mögliche mathematische Formulierung des in Fig. 2 dargestellten Modells ist im allgemeinen Teil bereits ausführlich dargestellt worden und läßt sich ohne weiteres auf das hier dargestellte Coriolis-Massedurchflußmeßgerät 1 mit zwei geraden Meßrohren 2a, 2b. übertragen, die jeweils zu Schwingungen in verschiedenen Eigenformen angeregt werden können.

Für den Betrieb des Coriolis-Massedurchflußmeßgeräts ist es wichtig, jederzeit über den Zustand des Coriolis-Massedurchflüßmeßgeräts informiert zu sein und Veränderungen an dem Coriolis-Massedurchflußmeßgerät - vor allem auch im geregelten Betrieb - unmittelbar zu erkennen, sei es, um Strömungsparameter in Kenntnis dieser Veränderungen richtig ermitteln zu können, sei es um Geräteparameter beispielsweise im Rahmen der Diagnose und Wartung überhaupt in Erfahrung bringen zu können, oder sei es, um Umgebungsparameter, wie z.B. die Pulsation einer Pumpe, zeitnah erfassen zu können.

Dazu ist vorgesehen, daß eine Sollgröße des geschlossenen Regelkreises 5a, 5b, 5c in vorbestimmter Weise variiert wird und durch Auswertung wenigstens eines resultierenden Anregungssignals $F_i(t)$ und/oder wenigstens eines resultierenden Antwortsignals $y_i(t)$ mit Hilfe eines mathematischen Modells des Coriolis-Massedurchflußmeßgeräts 1 wenigstens ein Parameter der angeregten Eigenform selektiv identifiziert wird.

Die Ansteuerung des Meßrohrs 2a, 2b bzw. des zur Schwingung anregbaren Teils des Coriolis-Massedurchflußmeßgeräts 1 durch eine Regelung in einem Regelkreis ist zunächst in Fig. 3 dargestellt, wobei das Coriolis-Massedurchflußmeßgerät 1 lediglich als ein Block dargestellt ist, der als Eingangsgröße das Anregungssignal $F_i(t)$ erhält und auf die Anregung mit dem Antwortsignal $y_i(t)$ als Ausgangssignal antwortet. Bei dem Anregungssignal $F_i(t)$ kann es sich auch um mehrere Anregungssignale $F_i(t)$ handeln, wenn es erforderlich ist, zur Anregung einer bestimmten Eigenform mehrere der Schwingungserzeuger $3\overline{a}$, 3b, 3c anzusprechen. Das Anregungssignal $F_i(t)$ wird von einem Signalgenerator 6 erzeugt.

Die in Fig. 3 dargestellte Regelung ist eine Mehrgrößenregelung in insgesamt drei Regelkreisen 5a, 5b, 5c, wobei der Amplitudenregler 7 im Amplitudenregelkreis 5a die über die Amplitudenmessung 8 erfaßte Amplitude $A_i$ der angeregten Eigenform dem vorgegebenen Wert $A_{i,soll}$ angleicht. In gleicher Weise gleicht der Phasenregler 9 den vorgegebenen Wert für die Soll-Phase $\varphi_{i,soll}$ zwischen dem Anregungssignal $F_i(t)$ und dem Antwortsignal $y_i(t)$ dem Wert der durch den Phasenermittler 10 ermittelten Ist-Phase $\varphi_i$, an.

Durch einen Schätzer 11 für die Resonanzfrequenzen der angeregten Eigenformen werden die Resonanzfrequenzen der jeweiligen Eigenformen geschätzt - z.B. über die Erfassung von Null-Durchgängen oder mittels Beobachterverfahren - und es wird eine Vorsteuerung 12 der jeweiligen Eigenform vorgenommen. Die Vorsteuerung 12 der Signalgeneratoren 6 erfolgt unter Verwendung von a-priori-Wissen über das verwendete Coriolis-Massedurchflußmeßgerät, das beispielsweise in theoretisch berechnetem oder experimentell ermittelten Wertbereichen für die Modellparameter besteht -, so daß durch die Vorsteuerung 12 jedenfalls eine der anzuregenden Eigenform geeignete Anregung des Coriolis-Massedurchflußmeßgeräts erreicht wird, wenn dieses ungestört betrieben wird (also z.B. bei Nenndurchfluß und bei Nenntemperatur betrieben wird und keine sonstigen Abweichungen von den zugrundeliegenden Annahmen vorliegen). Durch diese Vorsteuerung 12 wird zum einen eine Vorauswahl der angeregten Eigenformen getroffen und zum anderen die Dynamik der Ausregelung der Regelabweichungen erhöht.

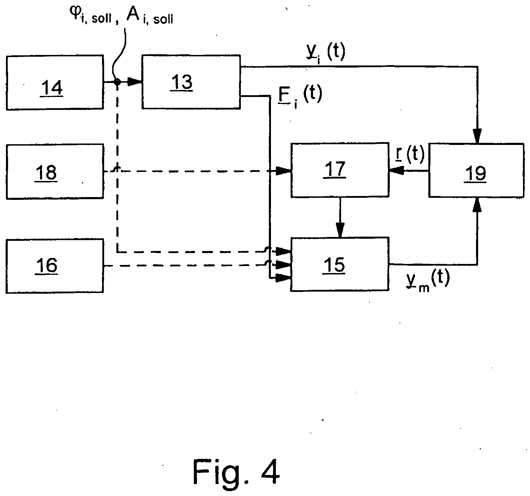

In Fig. 4 ist die in Fig. 3 dargestellte geregelte Strecke - also das geregelte Coriolis-Massedurchflußmeßgerät 1 lediglich als ein Block 13 dargestellt. Das mit einer Regelung versehene Coriolis-Massedurchflußmeßgerät 13 wird durch Vorgabe von Soll-Trajektorien, in denen im vorliegenden Fall der Sollwert $\varphi_i$, in vorbestimmter Weise variiert wird, von einem Soll-Trajektoriengenerator 14 beaufschlagt.

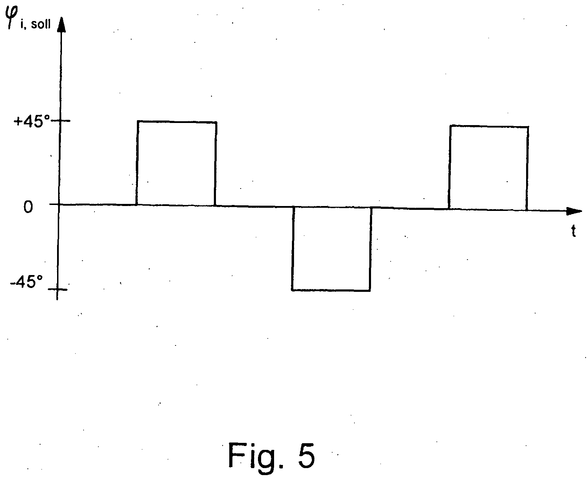

Daß Parameter der angeregten Eigenform selektiv identifiziert werden können, liegt in der geschickten Wahl der vorbestimmten Variation der Sollgröße, hier also der Sollphase $\varphi_{i,soll}$ zwischen dem Anregungssignal $F_i(t)$ und dem Antwortsignal $y_i(t)$ der jeweiligen Eigenform, wobei vorliegend die Soll-Trajektorie der Sollphase $\varphi_{i,soll}$ zwischen den Phasenwerten -45°, 0° und +45° variiert wird, so wie dies in Fig. 5 angegeben ist. Die Sollphase $\varphi_{i,soll}$ der jeweiligen Eigenform wird hier durch geeignete Anpassung der Frequenz der angeregten Schwingung einfestellt, nämlich durch die Variation der Frequenz des Anregungssignals $F_i(t)$ um die Eigenkreisfrequenz $\omega_{0i}$.

Dem in Fig. 4 durch ein Blockschaltbild dargestellten Verfahren zur selektiven online-Identifizierung von Parametern der angeregten Eigenformen liegt ein mathematisches Modell 15 zugrunde, das gebildet wird aus einer bestimmten Modellstruktur 16 - Modellierung der Eigenschwingungen der Meßrohre 2a, 2b durch Lagrange-Gleichungen zweiter Ordnung - und konkreten Werten für die in der Struktur auftretenden Parameter. Die Parameter des zugrundeliegenden mathematischen Modells werden mittels eines Identifiktionsalgorithmus 17 - ggf. unter Vorgabe von a-priori-Informationen 18 - ermittelt, in dem die tatsächlichen Antwortsignale $y_i(t)$ mit den Antwortsignalen $y_M(t)$ des Modells in einer Vergleichsstelle 19 miteinander verglichen werden und die Abweichung $\underline{r}(t)$ zur weiteren Identifikation der interessierenden Modellparameter - und damit der tatsächlichen Parameter des Coriolis-Massedurchflußmeßgeräts - herangezogen werden.

Im Rahmen der im allgemeinen Beschreibungteil dargestellten Ableitung von Bestimmungsgleichungen für die Parameter Dämpfung $d_i$, schwingfähige Masse $m_i$ und Steifigkeit $c_i$ der jeweils angeregten Eigenform ist ersichtlich, wie einfach eine Parameteridentifikation bei dem in der Regelung befindlichen Coriolis-Massedurchflußmeßgerät 13 möglich ist. In dem hier dargestellten Ausführungsbeispiel wird dazu die Sollgröße der Phase während des Regelbetriebs fortwährend - wie in Fig. 5 dargestellt - variiert und die Identifizierung der Parameter der angeregten Eigenform simultan durchgeführt.

Die in Fig. 3 dargestellte Regelung und die in Fig. 4 dargestellte angeschlossene Auswertung zur Bestimmung der interessierenden Parameter der angeregten Eigenformen sind jeweils separat für jede angeregte Eigenform realisiert, was durch den Index i für die i-te Eigenform angedeutet ist.

Mit der in Fig. 5 dargestellten Vorgabe der Sollgröße für die Phase $\varphi_i$ wird die Bestimmung der Dämpfung $d_i$ der angeregten Eigenform durch den Zusammenhang gemäß Gleichung 10 durchgeführt, wozu die Anregung mit der Eigenkreisfrequenz $\omega_{0i}$ ausreicht. Zusätzlich läßt sich der Dämpfungsparameter $d_i$ jedoch auch bei anderen Werten für die Sollphase nach den Zusammenhängen gemäß den Gleichungen 11 und 12 berechnen, wobei dazu die Phasenkreisfrequenzen $\omega_{0i}$-45° und $\omega_{0i}$+45° verwendet werden müssen, diese Kreisfrequenzen stehen jedoch unmittelbar zur Verfügung, da sie ja atuomatisch eingeregelt werden. Die weiteren Parameter der angeregten Eigenformen werden dann anhand der Gleichungen 13 bis 20 ermittelt und die auf verschiedenen Wegen erhaltenen Werte für diese Parameter ggf. gemittelt.

Von besonderer Bedeutung ist hier, daß bei dem gemäß den Fig. 3 und 4 dargestellten Verfahren zum Betrieb des Coriolis-Massesdurchflußmeßgeräts gemäß Fig. 1 aus den selektiv identifizierten Parametern nachfolgend abgeleitete Parameter identifiziert werden. Im vorliegenden Fall wird als abgeleiteter Parameter u.a. der Güte-Faktor $Q_i$ der angeregten Eigenform bestimmt, nämlich aus den Werten für die schwingende Masse $m_i$, die Dämpfung $d_i$ und die Eigenkreisfrequenz $\omega_{0i}$ der angeregten Eigenform. Durch die Ermittlung des Güte-Faktors $Q_i$ ist es möglich, Veränderungen des Zustandes des Cöriolis-Massedurchflußmeßgeräts zu erfassen, beispielsweise bei der Produktion, Kalibrierung und der laufenden Diagnose.

Fig. 1 zeigt insgesamt ein Coriolis-Massedurchflußmeßgerät, in dem die zuvor beschriebenen Verfahren zum Betrieb eines Coriolis-Massedurchflußmeß- , geräts realisiert sind, nämlich realisiert sind gemäß den Fig. 3 und 4.

**Patentansprüche**

1. Verfahren zum Betreiben eines Resonanzmeßsystems (1), insmesondere eines Coriolis-Massedurchflußmeßgeräts (1), wobei das Resonanzmeßsystem (1) wenigstens ein Schwingelement (2a, 2b), wenigstens einen Schwingungserzeuger (3a, 3b, 3c) und wenigstens einen Schwingungsaufnehmer (4a, 4b, 4c) umfaßt, wobei das Schwingelement (2a, 2b) in wenigstens einer Regelung in wenigstens einem Regelkreise (5a, 5b, 5c) durch den von wenigstens einem Anregungssignal $F_i(t)$ angeregten Schwingungserzeuger (3a, 3b, 3c) zur Schwingung in wenigstens einer Eigenform angeregt wird und die angeregte Schwingung des Schwingelements (2a, 2b) von dem Schwingungsaufnehmer (4a, 4b, 4c) als wenigstens ein Antwortsignal $y_i(t)$ erfaßt wird,
**dadurch gekennzeichnet,**
**daß** wenigstens eine Sollgröße des geschlossenen Regelkreises (5a, 5b, 5c) in vorbestimmter Weise variiert wird und durch Auswertung wenigstens eines resultierenden Anregungssignals $F_i(t)$ und/oder wenigstens eines resultierenden Antwortsignals $y_i(t)$ mit Hilfe eines mathematischen Modells des Resonanzmeßsystems (1) wenigstens ein Parameter der angeregten Eigenform selektiv identifiziert wird, wobei als Sollgröße des geschlossenen Regelkreises die Phase $\varphi_i$ zwischen dem Anregungssignal $F_i(t)$ und dem Antwortsignal $y_i(t)$ der jeweiligen Eigenform verwendet wird.

2. Verfahren nach Anspruch 1, **dadurch gekennzeichnet, daß** die Sollgröße während des Regelbetriebes fortwährend variiert wird, insbesondere wobei die Identifizierung des Parameters der angeregten Eigenform fortwährend durchgeführt wird.

3. Verfahren nach Anspruch 1 oder 2, **dadurch gekennzeichnet, daß** die Regelung als Mehrgrößenregelkreis (5a, 5b, 5c) ausgestaltet ist, insbesondere für jede angeregte Eigenform, vorzugsweise für wenigstens zwei der Regelgrößen Frequenz, Phase und/oder Amplitude der angeregten Schwingung des Schwingelements (2a, 2b).

4. Verfahren nach Anspruch 3, **dadurch gekennzeichnet, daß** in einem Amplitudenregelkreis (5 a) das Anregungssignal $F_i(t)$ so angepaßt wird, daß die Amplitude $A_i$ der angeregten Schwingung des Schwingelements (2a, 2b) im wesentlichen konstant ist, insbesondere einem Amplitudenwert entspricht, der einen deformations- und zerstörungsfreien Betrieb des Schwingelements (2a, 2b) gestattet, vorzugsweise bei größtmöglicher Amplitude.

5. Verfahren nach einem der Ansprüche 1 bis 4, **dadurch gekennzeichnet, daß** die Solltrajektorie der Sollphase zwischen wenigstens zwei Werten der Phasenwerte -45°, 0° und +45° variiert wird, vorzugsweise sprunghaft variiert wird.

6. Verfahren nach Anspruch 5, **dadurch gekennzeichnet, daß** die Sollphase $\varphi_i$ der jeweiligen Eigenform durch Variation der Frequenz der angeregten Schwingung erzielt wird, vorzugsweise durch Variation der Frequenz des Anregungssignals um die Eigenkreisfrequenz $\omega_{0i}$, insbesondere wobei die zur Erzielung der Sollphase eingestellte Phasenkreisfrequenz ($\omega_{i+45°}$, $\omega_{0i+45°}$) zur Ermittlung eines Parameters der angeregten Eigenform herangezogen wird.

7. Verfahren nach einem der Ansprüche 1 bis 6, **dadurch gekennzeichnet, daß** die selektive Identifizierung des Parameters der angeregten Eigenform im eingeschwungenen Zustand erfolgt, insbesondere wenn als variierte Sollgröße die Phase zwischen dem Anregungssignal und dem Antwortsignal der jeweiligen Eigenform verwendet wird.

8. Verfahren nach einem der Ansprüche 1 bis 7, **dadurch gekennzeichnet, daß** als mathematisches Modell für das Resonanzmeßsystem (1) ein analytisches mechanisches Modell für jede angeregte Eigenform verwendet wird, insbesondere für jede Eigenform eine Differentialgleichung zweiter Ordnung verwendet wird, insbesondere mit den Parametern Federkonstante, schwingende Masse und Dämpfungskoeffizient, insbesondere wobei im Falle mehrerer angeregter Eigenformen zur selektiven Bestimmung der Parameter der Eigenform zunächst die Kopplungen der Eigenformen vernachlässigt werden.

9. Verfahren nach Anspruch 8, **dadurch gekennzeichnet, daß** als erster Parameter selektiv die Dämpfung identifiziert wird.

10. Verfahren nach einem der Ansprüche 1 bis 9, **dadurch gekennzeichnet, daß** aus den selektiv identifizierten Parametern abgeleitete Parameter identifiziert werden, insbesondere im Fall eines als des Coriolis-Massedurchflußmeßgerät ausgebildeten Resonanzmeßsystems Strömungsparameter wie Massedurchfluß, Dichte, Druck, Viskosität, Mehrphasenströmung und/oder Geräteparameter für Erosion, Korrosion, Ablagerung, Teilfüllung und mechanische Berührung der schwingenden Komponenten mit feststehenden Teilen und/oder Umgebungsparameter wie Pulsation einer Pumpe während des Betriebs des Coriolis-Massedurchflußmeßgeräts (1).

11. Verfahren nach Anspruch 10, **dadurch gekennzeichnet, daß** als abgeleiteter Parameter die Eigenkreisfrequenz $\omega_{0i}$ der jeweiligen Eigenform bestimmt wird, insbesondere wobei die ermittelte Eigenkreisfrequenz $\omega_{0i}$ bei der nachfolgenden Anregung des Schwingelements (2a, 2b) zur Schwingung in der korrespondierenden Eigenform berücksichtigt wird.

12. Verfahren nach Anspruch 10 oder 11, **dadurch gekennzeichnet, daß** als abgeleiteter Parameter der Güte-Faktor $Q_i$ der angeregten Eigenform bestimmt wird, insbesondere aus den Werten für die schwingende Masse, die Dämpfung und die Eigenkreisfrequenz $\omega_{0i}$ der angeregten Eigenform, oder aus dem Verhältnis der ermittelten Eigenkreisfrequenz $\omega_{0i}$ zur Bandbreite der ermittelten Phasenkreisfrequenzen oder aus einer anderen geeigneten Kombination aus den Werten für die Eigenkreisfrequenz $\omega_{0i}$ und wenigstens einem ermittelten Wert für Phasenkreisfrequenz $\omega_{0i_{-45}}$, $\omega 0i_{-45}$.

13. Verfahren nach einem der Ansprüche 10 bis 12, **dadurch gekennzeichnet, daß** als abgeleiteter Parameter die Instationarität des Resonanzmeßsystems (1) ermittelt wird, insbesondere aus einer geeigneten Kombination aus den Werten für die Eigenkreisfrequenz $\omega_{0i}$ und wenigstens einem ermittelten Wert für die Phasenkreisfrequenz $\omega_{0i-45}$, $\omega_{0i-45}$.

14. Verfahren nach einem der Ansprüche 1 bis 13, **dadurch gekennzeichnet, daß** im Falle des als Coriolis-Massedurchflußmeßgerät (1) ausgebildeten Resonanzmeßsystems (1) die Coriolis-Kopplung $k_{b12}$ und/oder die Beschleunigungskopplung $k_{b12}$ der ersten angeregten Eigenform auf die zweite angeregte Eigenform selektiv, insbesondere frequenz- und phasenselektiv, identifiziert werden bzw. wird.

15. Resonanzmeßsystems (1) mit einem Schwingelement (2a, 2b), insbesondere als Coriolis-Massedurchflußmeßgerät ausgebildetes Resonanzmeßsystem (1) mit wenigstens einem von einem Medium durchströmbaren Meßrohr (2a, 2b) als Schwingelement, wenigstens einem Schwingungserzeuger (3a, 3b, 3c) und wenigstens einem Schwingungsaufnehmer (4a, 4b, 4c) wobei das Meßrohr (2a, 2b) in wenigstens einer Regelung in wenigstens einem Regelkreis (5a, 5b, 5c) durch den von wenigstens einem Anregungssignal angeregten Schwingungserzeuger (3a, 3b, 3c) zur Schwingung in wenigstens einer Eigenform anregbar ist und die angeregte Schwingung des Schwingelements (2a, 2b) von dem Schwingungsaufnehmer (4a, 4b, 4c) als wenigstens ein Antwortsignal erfaßbar ist,
**dadurch gekennzeichnet,**
**daß** das Resonanzmeßsystem (1) mit einem Regelkreis (5a, 5b, 5c) ausgestattet ist, der so ausgestaltet ist, daß es mit einem Verfahren nach einem der Ansprüche 1 bis 14 betrieben werden kann.

## Claims

1. Method for operating a resonance-measuring system (1), in particular a Coriolis mass flowmeter (1), wherein the resonance measuring system (1) comprises at least one oscillation element (2a, 2b), at least one oscillation driver (3a, 3b, 3c) and at least one oscillation sensor (4a, 4b, 4c), wherein, in at least one control in at least one control loop (5a, 5b, 5c), the oscillation element (2a, 2b) is excited to oscillation in at least one eigenform by the oscillation driver (3a, 3b, 3c) excited by at least one excitation signal $F_i(t)$ and the excited oscillation of the oscillation element (2a, 2b) is detected by the oscillation sensor (4a, 4b, 4c) as at least one response signal $y_i(t)$,
**characterized in**
**that** at least one set variable of the closed loop (5a, 5b, 5c) is varied in a predetermined manner and at least one parameter of the excited eigenform is selectively identified by evaluating at least one resulting excitation signal $F_i(t)$ and/or at least one resulting response signal $y_i(t)$ with the help of a mathematical model of the resonance-measuring system (1), wherein the phase $\varphi_i$ between the excitation signal $F_i(t)$ and the response signal $y_i(t)$ of the respective eigenform is used as set variable of the closed control loop.

2. Method according to claim 1, **characterized in that** the set variable is constantly varied during normal operation and, in particular, wherein identification of the parameters of the excited eigenform is constantly carried out.

3. Method according to claim 1 or 2, **characterized in that** the control is designed as a multi-variable loop (5a, 5b, 5c), in particular for every excited eigenform, preferably for at least two of the control variables frequency, phase and/or amplitude of the excited oscillation of the oscillation element (2a, 2b).

4. Method according to claim 3, **characterized in that** the excitation signal $F_i(t)$ is adjusted in an amplitude loop (5a) so that the amplitude $A_i$ of the oscillation of the oscillation element (2a, 2b) is essentially constant, in particular corresponds to an amplitude value that allows a deformation- and destruction-free operation of the oscillation element (2a, 2b), preferably at a large as possible amplitude.

5. Method according to any one of claims 1 to 4, **characterized in that** the set trajectory of the set phase varies between at least two values of the phase values -45°, 0° and +45°, preferably varies step-like.

6. Method according to claim 5, **characterized in that** the set phase $\varphi_i$ of each eigenform is achieved by variation of the frequency of the excited oscillation, preferably is achieved using variations of the frequency of the excited oscillation, presently, preferably using variations of the frequency of the excitation signal at the eigen angular frequency $\omega_{0i}$ wherein, in particular, the phase angular frequencies ($\omega_{i+45°}$, $\omega_{0i+45°}$) set for achieving each set phase are used to determine a parameter of the excited eigenform.

7. Method according to any one of claims 1 to 6, **characterized in that** the selective identification of the parameter of the excited eigenform occurs in a steadily oscillating state, in particular when the phase between the excitation signal and the response signal of the respective eigenform is used as varied set variable.

8. Method according to any one of claims 1 to 7, **characterized in that** an analytical-mechanical model is used for each excited eigenform as a mathematical model for the resonance-measuring system (1), in particular a second order differential equation is used for each eigenform, in particular with the parameters spring constant, oscillating mass and damping coefficient, in particular wherein, in the case of multiply excited eigenforms, the couplings of the eigenforms are initially neglected for selective determination.

9. Method according to claim 8, **characterized in that** damping is selectively identified as the first parameter.

10. Method according to any one of claims 1 to 9, **characterized in that** derived parameters are identified from the selectively identified parameters, in particular in the case of a resonance-measuring system designed as a Coriolis mass flowmeter, flow parameters such as mass flow, density, pressure, viscosity, multi-phase flow and/or device parameters for erosion, corrosion, sedimentation, partial filling and mechanical contact of the oscillating components with fixed parts and/or an environmental parameter such as pulsation of a pump during operation of the Coriolis mass flowmeter (1).

11. Method according to claim 10, **characterized in that** the eigen angular frequency $\omega_{0i}$ of each eigenform is determined as a derived parameter, in particular wherein the determined eigen angular frequency $\omega_{0i}$ is taken into account in the subsequent excitation of the oscillation element (2a, 2b) to oscillation in the corresponding eigenform.

12. Method according to claim 10 or 11, **characterized in that** a quality factor $Q_i$ of the excited eigenform is determined as a derived parameter, in particular from the values for the oscillating mass, the damping and the eigen angular frequency $\omega_{0i}$ of the excited eigenform or from the ratio of the determined eigen angular frequency $\omega_{0i}$ to the band width of the determined phase angular frequencies or from another suitable combination of the value for the eigen angular frequency $\omega_{0i}$ and at least one determined value for a phase angular frequency $\omega_{0i+45°}$, $\omega_{0i+45°}$.

13. Method according to any one of claims 10 to 12, **characterized in that** an instationarity of the resonance-measuring system (1) is determined as a derived parameter, in particular from a suitable combination of the values for the eigen angular frequency $\omega_0$ and at least one determined value for the phase angular frequency $\omega_{0i+45°}$, $\omega_{0i+45°}$.

14. Method according to any one of claims 1 to 13, **characterized in that**, in the case of the resonance-measuring system (1) designed as a Coriolis mass flowmeter (1), the Coriolis coupling $k_{b12}$ and/or the acceleration coupling $k_{b12}$ of the first excited eigenform to the second excited eigenform are selectively identified, in particular frequency and phase selectively.

15. Resonance-measuring system (1), comprising an oscillation element (2a, 2b), in particular a resonance-measuring system (1) designed as a Coriolis mass flowmeter having at least one measuring tube (2a, 2b) with a flowing medium as an oscillation element, at least one oscillation driver (3a, 3b, 3c) and at least one oscillation sensor (4a, 4b, 4c), wherein, in at least one control in at least one control loop (5a, 5b, 5c), the measuring tube (2a, 2b) is excitable to oscillation in at least one eigenform by the at least one oscillation driver (3a, 3b, 3c) excited by at least one excitation signal and the excited oscillation of the oscillation element (2a, 2b) can be detected by the oscillation sensor (4a, 4b, 4c) as at least one response signal,
**characterized in**
**that** the resonance measurement system (1) is equipped with a control loop (5a, 5b, 5c) that is designed so that it can be operated with a method according to any one of claims 1 to 14.


**Revendications**

1. Procédé de mise en fonctionnement d'un système de mesure de résonance (1), en particulier d'un débitmètre massique à effet Coriolis (1), dans lequel le système de mesure de résonance (1) comprend au moins un élément oscillant (2a, 2b), au moins un générateur d'oscillation (3a, 3b, 3c) et au moins un capteur d'oscillation (4a, 4b, 4c), dans lequel l'élément oscillant (2a, 2b) est excité lors d'au moins une régulation dans au moins un circuit régulateur (5a, 5b, 5c) par l'au moins un générateur d'oscillation (3a, 3b, 3c) excité par au moins un signal d'excitation $F_i(t)$ pour osciller dans au moins un mode propre et l'oscillation excitée de l'élément oscillant (2a, 2b) est détectée par le capteur d'oscillation (4a, 4b, 4c) sous la forme d'au moins u signal de réponse $y_i(t)$,
**caractérisé en ce qu'**au moins une grandeur théorique du circuit de régulation (5a, 5b, 5c) fermé est amenée à varier de manière prédéterminée et au moins un paramètre du mode propre excité est identifié sélectivement par évaluation d'au moins un signal d'excitation $F_i(t)$ résultant et/ou d'au moins un signal de réponse $y_i(t)$ résultant à l'aide d'un modèle mathématique du système de mesure de résonance (1), dans lequel la phase $\varphi_i$ entre le signal d'excitation $F_i(t)$ et le signal de réponse $y_i(t)$ du mode propre respectif est utilisée en tant que grandeur théorique du circuit de régulation fermé.

**2.** Procédé selon la revendication 1, **caractérisé en ce que** la grandeur théorique est amenée à varier en continu, en particulier, dans lequel l'identification des paramètres du mode propre excité est effectuée en continu.

**3.** Procédé selon la revendication 1 ou 2, **caractérisé en ce que** la régulation est réalisée sous la forme d'un circuit régulateur à plusieurs grandeurs (5a, 5b, 5c), en particulier pour chaque mode propre excité, de préférence pour au moins deux des grandeurs de régulation, à savoir la fréquence, la phase et/ou l'amplitude de l'oscillation excitée de l'élément oscillant (2a, 2b).

**4.** Procédé selon la revendication 3, **caractérisé en ce que** le signal d'excitation $F_i(t)$ est adapté dans un circuit régulateur d'amplitude (5a) de manière à ce que l'amplitude $A_i$ de l'oscillation excitée de l'élément oscillant (2a, 2b) soit sensiblement constante, et corresponde en particulier à une valeur d'amplitude qui provoque un fonctionnement exempt de déformation et de perturbation de l'élément oscillant (2a, 2b), de préférence pour une amplitude la plus grande possible.

**5.** Procédé selon l'une quelconque des revendications 1 à 4, **caractérisé en ce que** la trajectoire théorique de la phase théorique est amenée à varier entre au moins deux valeurs des valeurs de phase de -45°, 0° et +45°, de préférence par sauts.

**6.** Procédé selon la revendication 5, **caractérisé en ce que** la phase théorique $\varphi_i$ du mode propre respectif est obtenue par variation de la fréquence de l'oscillation excitée, de préférence par variation de la fréquence du signal d'excitation au voisinage de la fréquence de circuit propre $\omega_{0i}$, en particulier dans lequel la fréquence de circuit de phase ($\omega_{i+45°}$, $\omega_{0i+45°}$) réglée pour établir la phase théorique est prise en compte pour établir un paramètre du mode propre excité.

**7.** Procédé selon l'une quelconque des revendications 1 à 6, **caractérisé en ce que** l'identification sélective du paramètre du mode propre excité est effectuée dans un état de mise en oscillation, en particulier lorsque la phase entre le signal d'excitation et le signal de réponse du mode propre respectif est utilisée en tant que grandeur théorique amenée à varier.

**8.** Procédé selon l'une quelconque des revendications 1 à 7, **caractérisé en ce qu'**un modèle mécanique analytique est utilisé en tant que modèle mathématique du système de mesure de résonance (1) pour chaque mode propre excité, en particulier, une équation différentielle du deuxième ordre est utilisé pour chaque mode propre, en particulier avec les paramètres que sont la constante de rappel, la masse oscillante et le coefficient d'amortissement, en particulier dans lequel, dans le cas où il existe plusieurs modes propres excités, les couplages des modes propres sont tout d'abord négligés pour déterminer sélectivement les paramètres du mode propre.

**9.** Procédé selon la revendication 8, **caractérisé en ce que** l'amortissement est identifié sélectivement en tant que premier paramètre.

**10.** Procédé selon l'une quelconque des revendications 1 à 9, **caractérisé en ce que** des paramètres dérivés des paramètres identifiés sélectivement sont utilisés, en particulier dans le cas d'un système de mesure de résonance réalisé sous la forme du débitmètre massique à effet Coriolis, des paramètres d'écoulement, tels que le débit massique, la densité, la pression, la viscosité, un écoulement en plusieurs phases et/ou des paramètres d'appareil concernant l'érosion, la corrosion, les dépôts, le remplissage partiel et un contact mécanique des composants oscillants avec des parties fixes et/ou des paramètres d'environnement tels que la pulsation d'une pompe pendant le fonctionnement du débitmètre massique à effet Coriolis (1).

**11.** Procédé selon la revendication 10, **caractérisé en ce que** la fréquence de circuit propre $\omega_{0i}$ du mode propre respectif est déterminée en tant que paramètre dérivé, n en particulier dans lequel la fréquence de circuit propre $\omega_{0i}$ établie est prise en copte lors de l'excitation ultérieure de l'élément oscillant (2a, 2b) pour une oscillation selon le mode propre correspondant.

**12.** Procédé selon la revendication 10 ou 11, **caractérisé en ce que** le facteur de qualité $Q_i$ du mode propre excité est déterminée en tant que paramètre dérivé, en particulier à partir des valeurs de la masse oscillante, de l'amortissement et de la fréquence de circuit propre $\omega_{0i}$ du mode propre excité, ou à partir du rapport entre la fréquence de circuit propre $\omega_{0i}$ et la largeur de bande des fréquences de circuit de phase établies ou à partir d'une autre combinaison appropriée entre les valeurs de la fréquence de circuit propre $\omega_{0i}$ et au moins une valeur déterminée pour la fréquence de circuit de phase $\omega_{0i\text{-}45}$, $\omega_{0i\text{-}45}$.

13. Procédé selon l'une quelconque des revendications 10 à 12, **caractérisé en ce que** la non stationnarité du système de mesure de résonance (1) est établie en tant que paramètre dérivé, en particulier à partir d'une combinaison appropriée entre les valeurs de la fréquence de circuit propre $\omega_0$ et au moins une valeur établie pour la fréquence de circuit propre $\omega_{0i}$-45, $\omega_{0i\text{-}45}$.

14. Procédé selon l'une quelconque des revendications 1 à 13, **caractérisé en ce que**, dans le cas où le système de mesure de résonance (1) est réalisé sous la forme d'un débitmètre massique à effet Coriolis (1), le couplage de Coriolis $k_{b12}$ et/ou le couplage d'accélération $k_{b12}$ entre le premier mode propre excité et le second mode propre excité sont ou est identifiée(s) sélectivement, en particulier de manière sélective en fréquence et en phase.

15. Système de mesure de résonance (1) comportant un élément oscillant (2a, 2b), en particulier, système de mesure de résonance (1) réalisé sous la forme d'un débitmètre massique à effet Coriolis comportant au moins un tube de mesure (2a, 2b) en tant qu'élément oscillant, à travers lequel peut s'écouler un milieu, au moins un générateur d'oscillation (3a, 3b, 3c) et au moins un capteur d'oscillation (4a, 4b, 4c), dans lequel le tube de mesure (2a, 2b) peut être excité lors d'au moins une régulation dans au moins un circuit régulateur (5a, 5b, 5c) par le générateur d'oscillation (3a, 3b, 3c) excité par au moins un signal d'excitation pour osciller dans au moins un mode propre et l'oscillation excitée de l'élément oscillant (2a, 2b) peut être détectée par le capteur d'oscillation (4a, 4b, 4c) sous la forme d'au moins un signal de réponse, **caractérisé en ce que** le système de mesure de résonance (1) est équipé d'un circuit régulateur (5a, 5b, 5c) conçu de manière à pouvoir être mis en fonctionnement par un procédé selon l'une quelconque des revendications 1 à 14.

1

2a

3a  4a  3c  4c  2b  4b  3b

Fig. 1

Fig. 2

Fig. 3

$\varphi_{i,\,soll}$ , $A_{i,\,soll}$

$\underline{y}_i(t)$

$\underline{F}_i(t)$

14

13

18

17

$\underline{r}(t)$

19

16

15

$\underline{y}_m(t)$

Fig. 4

Fig. 5

**IN DER BESCHREIBUNG AUFGEFÜHRTE DOKUMENTE**

**In der Beschreibung aufgeführte Patentdokumente**

- DE 102006031198 A1
- US 2002178803 A1
- DE 10002635 A1